(19) Europäisches Patentamt
European Patent Office
Office européen des brevets

(11) **EP 3 832 349 A1**

(12) **EUROPEAN PATENT APPLICATION**

(43) Date of publication:
**09.06.2021 Bulletin 2021/23**

(51) Int Cl.:
*G01S 13/86* (2006.01)    *G01S 13/931* (2020.01)
*G01S 15/86* (2020.01)    *G01S 15/931* (2020.01)
*G01S 17/86* (2020.01)    *G01S 17/931* (2020.01)

(21) Application number: **19214218.0**

(22) Date of filing: **06.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Veoneer Sweden AB**
**447 37 Vårgårda (SE)**

(72) Inventors:
• **Rydström, Mats**
  **447 37 Vårgårda (SE)**
• **Eriksson, Olof**
  **447 37 Vårgårda (SE)**

(74) Representative: **Westpatent AB**
**Almekärrsvägen 11**
**443 39 Lerum (SE)**

(54) **ASSOCIATING RADAR DETECTIONS WITH RECEIVED DATA TRANSMISSIONS**

(57)    A method in a vehicle radar system (121) for associating a radar detection originating from a traffic object (101) with a data transmission (110) from the traffic object (101), the method comprising
receiving (Sa1) the data transmission (110), the data transmission comprising a transmitter identification, ID, and a received list of radar detections generated by a radar transceiver associated with the ID,
generating (Sa2) an ego list of radar detections by the vehicle radar system (121),
comparing (Sa3) detections in the ego list of radar detections to detections in the received list of radar detections to determine differences between detections in the ego list of radar detections and detections in the received list of radar detections, and
associating (Sa4) a first detection from the ego list of detections with the data transmission and/or to the ID in case a difference between the first detection and a detection from the received list of detections satisfies a similarity criterion.

FIG. 1

EP 3 832 349 A1

**Description**

The present disclosure relates to vehicular radar systems. There are disclosed arrangements and methods for associating radar detections to received data transmissions.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

A radar system does not require an active counter-part, as in a wireless communication system. Electromagnetic energy transmitted from the radar transceiver passively 'bounces' off electromagnetically reflecting targets. These reflections are then received back at the transceiver, whereupon one or more target detections can be made.

Recently, joint radar and communications systems have been proposed for automotive applications, where radar signals and communication signals are transmitted simultaneously and may even share the same waveform. The source of a received data transmissions can often be identified by an ID field, such as a medium access control (MAC) address, or Internet Protocol (IP) address, in the data transmission.

However, associating a data transmission received from some traffic object with a radar detection associated with that traffic object is still a challenge.

SUMMARY

It is an object of the present disclosure to provide methods and radar systems for associating radar detections with received data transmissions. This object is obtained by a method in a vehicle radar system for associating a radar detection originating from a traffic object with a data transmission from the traffic object. The method comprises receiving the data transmission. The data transmission comprises a transmitter identification (ID) and a received list of radar detections generated by a radar transceiver associated with the ID. The method also comprises generating an ego list of radar detections by the vehicle radar system and comparing detections in the ego list of radar detections to detections in the received list of radar detections to determine differences between detections in the ego list of radar detections and detections in the received list of radar detections. The method also comprises associating a first detection from the ego list of detections with the data transmission and/or to the ID in case a difference between the first detection and a detection from the received list of detections satisfies a similarity criterion.

This way a radar target detection by the radar system in an ego vehicle can be associated with a data transmission received by the ego vehicle. Thus, a communications link can be established between the ego vehicle and the object corresponding to the radar detection. This allows the ego vehicle to 'talk' to some of its radar detections, and e.g., inquire after intentions, type of object, or the like.

According to aspects, the method comprises receiving a received list of radar detections where each radar detection comprises at least a range and a Doppler value. By basing the association on both range and Doppler the quality and robustness of the associations is improved.

According to aspects, each radar detection in the received list of radar detections comprises a time stamp, and the comparing comprises adjusting a target range in the received list of radar detections to account for a processing delay prior to the comparing, wherein the adjusting is based on the respective Doppler values of the radar detections. This improves on the association quality, since delays in the data processing by the method can be compensated for.

According to aspects, the similarity criterion comprises a difference between the first detection and a detection from the received list of radar detections which is associated with the smallest difference out of all detections in the received list of radar detections. This difference is determined in a computationally efficient manner.

According to aspects, the similarity criterion is a weighted similarity criterion configured to weight a difference between detection ranges in relation to a difference between Doppler values of the radar detection. The weights can be adapted to account for differences in reliability and suitability for target to data association. For instance, differences in Doppler can be weighted more heavily compared to differences in range, which may be more prone to error due to variable processing delay.

According to aspects, the similarity criterion is a time averaged similarity criterion evaluated over more than one ego list of radar detections and respective received list of radar detections.

By using time averaging, more information can be exploited in order to increase the robustness and accuracy of the associations between data transmissions and radar detections.

According to aspects, the data transmission comprises a traffic object type associated with the ID, the method comprising classifying the first detection from the ego list of detections based on the traffic object type. Classification based on radar detections is normally a challenging task associated with many problems. However, given an association between radar detection and data transmission, the classification task is significantly simplified.

According to aspects, the data transmission comprises a maneuver message and the method comprising executing an ego vehicle maneuver based on the maneuver message and on the first radar detection associated with the data transmission.

Thus, by being able to 'talk' to at some radar detections in the list of radar detections generated by the ego vehicle, improved ego vehicle maneuvering is enabled, which is ab advantage.

There is also disclosed herein a method in a vehicle radar system for associating a radar detection originating from a traffic object with a data transmission from the traffic object. The method comprises obtaining a transmitter identification (ID) associated with the vehicle radar system, generating a list of radar detections by the vehicle radar system, composing data comprising the ID and the list of radar detections, and transmitting, by a wireless data transmitter, the data as a data transmission. Thus, the methods disclosed herein for associating radar detections with data transmissions are enabled.

According to some aspects, the radar system comprises a radar transceiver spatially co-located with the wireless data transmitter and/or a radar transceiver spatially separated from the wireless data transmitter.

There are also disclosed herein vehicles and radar systems.

The vehicles and radar systems disclosed herein are associated with the same advantages as discussed above in connection to the different methods.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The present disclosure will now be described in more detail with reference to the appended drawings, where

Figure 1 schematically illustrates a vehicle;

Figure 2 shows an example traffic scenario;

Figure 3 schematically illustrates a range-Doppler matrix;

Figures 4A-B are flow charts illustrating methods;

Figure 5 schematically illustrates a control unit;

Figure 6 shows an example computer program product; and

Figure 7 shows an example of joint vehicle positioning.

DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

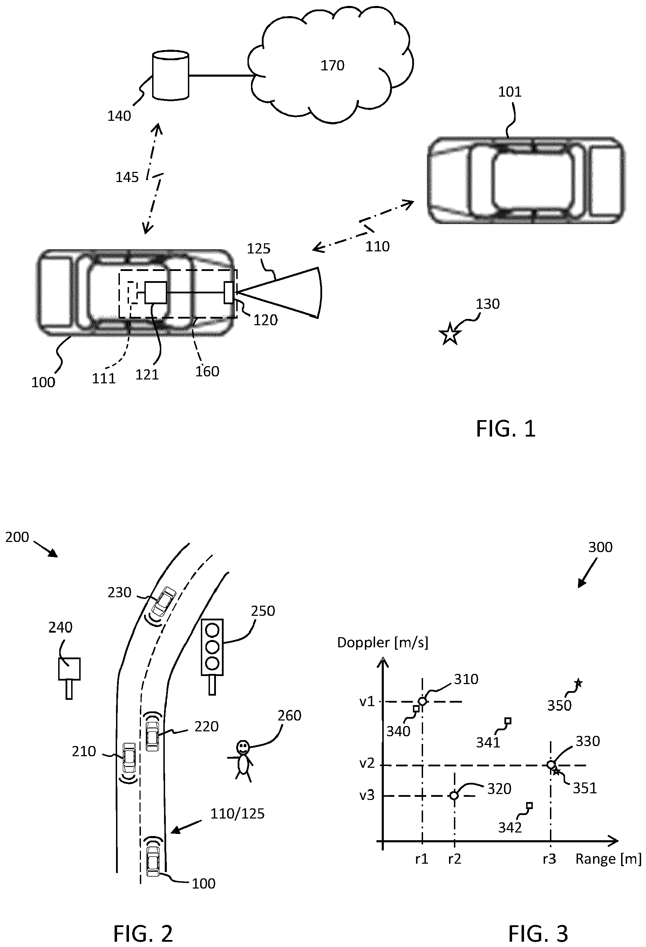

Figure 1 shows a vehicle 100 equipped with a vehicle radar system 160. The radar system comprises a control unit 121 and one or more radar transceivers 120. Each transceiver has one or more antenna ports arranged to be connected to respective antennas. A plurality of antennas are normally referred to as an antenna array. The techniques disclosed herein can be used with single antenna systems as well as in system comprising one or more antenna arrays.

The control unit 121 and the one or more radar transceivers 120 may be comprised in a single physical unit or they may be distributed over more than one physical unit. Some parts of the radar system functionality may even be comprised in a remote server 140 or cloud-based resource 170 connected to the vehicle 100 via wireless link 145.

According to an example, the vehicle radar system 160 comprises a transceiver arrangement 120 that is arranged for generating and transmitting radar signals in the form of frequency modulated continuous wave (FMCW) signals, sometimes also referred to as radar chirp signals, and to receive reflected radar signals, where the transmitted signals have been reflected by an object 130 at some distance.

The present disclosure is not limited to FMCW radar waveforms. Rather, the disclosed concepts and techniques can be applied to many different radar waveforms. In particular, the techniques disclosed herein are applicable to Orthogonal Frequency Division Multiplex (OFDM) radar, and to Pulse Modulated Continuous Wave (PMCW) radar. One example of OFDM radar is the stepped OFDM radar waveform described in EP3323151 A1.

The radar system 160 is associated with a field of view 125. In case the radar transceiver 120 is a front radar, a boresight direction of the radar often coincides with a center line of the field of view 125. In case of a side radar transceiver or a rear corner radar transceiver, the boresight direction may point in some other angle compared to the forward direction of the vehicle 100.

In general, the vehicle on-board radar system or systems are arranged to generate radar target detections based on radar signal energy scattered from nearby objects, such as the object 130 and another vehicle 101. These radar target detections may be generated as a range-Doppler matrix which indicates received radar signal energy corresponding to different distances and different relative velocities. Range-Doppler matrices are known and will therefore not be discussed in more detail herein. The radar target detections may also be generated as a detection list comprising ranges and relative velocities of detected targets. One or more targets may also be associated with a track indicating target motion over time. The radar target detections are normally transmitted to the control unit 121 for further processing.

The control unit 121 is also arranged to transmit and receive data via wireless link 110 to one or more other traffic objects, such as the other vehicle 101. This data may be transmitted using the same waveform as the radar signal, or it may be transmitted on a waveform that is separate from the radar signal waveform. For instance, OFDM and PMCW radar transmissions may be modulated to carry data in addition to functioning as a radar. In case a separate waveform is used for the communications, a wireless communications transceiver 111 may be comprised in the radar system 121. This transceiver is not necessary in case a joint waveform is used for both radar and communications.

The wireless data transmitted to other traffic objects may, e.g., comprise information about planned actions, such as imminent braking by the vehicle 100, planned turns, accelerations, and the like. This data can be received by nearby traffic objects such as other vehicles, pedestrians, and fixed traffic infrastructure. Nearby vehicles may, for example, plan their own maneuvers in dependence of the received data and thereby avoid accidents.

The communication link 110 can also be used for negotiating upcoming maneuvers. For instance, two vehicles may agree on which vehicle that changes lane first, or makes a turn in front of the other vehicle.

The control unit 121 may also be connected via wireless link 145 to a remote server 140, which in turn may be comprised in a cloud-based resource 170 or remote network. This server and network may be configured to assist the vehicle 100 in performing various operations such as radar signal processing, interference mitigation, beamforming, and the like.

It is appreciated that the car shown in Figure 1 is just an example vehicle. The radar fault detection systems disclosed herein may be arranged on any type of vehicle, preferably land-based, such as motorcycles, trucks, busses, trains, trams, bicycles. Furthermore, it is appreciated that the radar transceiver can be arranged on any location on the vehicle and in any orientation, such as in a rearward- or forward-facing position, on top of, under, or on the sides etc.

It is of interest to be able to associate radar target detections with data transmissions from other traffic objects. This is not an easy task, since radar detections are passive in nature, i.e., the transmitted signal has just 'bounced' off the detected target. No information has been modulated onto the waveform as is the case when two wireless transceivers communicate with each other.

A potential solution could be to include position data in the data transmissions, obtained from, e.g., global positioning system (GPS) receivers. However, such positioning data is often associated with large error, and cannot be considered accurate enough for, e.g., safety related vehicular applications.

However, if an association or correspondence can be established between a given radar detection made by the vehicle 100 and the ID of a nearby traffic object, such as the other vehicle 101, then a dedicated communication link can be established to that traffic object, which traffic object at the same time can be monitored or tracked spatially by following the associated radar detection. Any future data transmissions from this traffic object can then be associated with the radar detection and the messages comprised in the data transmissions can be evaluated based on a spatial relationship between the ego vehicle and the traffic object.

For example, if an association has been made between a given received data transmission and a radar detection, and the radar target detection is located in the same lane and ahead of the ego vehicle, then an emergency brake communication comprised in the data transmission may warrant an emergency brake operation also by the ego vehicle. On the other hand, if the radar detection associated with the transmission is instead in some other lane, or in the same lane but behind the ego vehicle, then an emergency brake operation may not be warranted. An ego vehicle may, e.g.,

inquire about the intentions of a certain radar detection which is behaving strangely.

The problem of classifying a given radar detection as belonging, e.g., to a certain type of vehicles obviously becomes a lot less difficult if the ego vehicle is able to associate the radar target detection with an ID, since then the ego vehicle may just ask the transceiver having that ID what type of vehicle it is mounted on. The ego vehicle may also access a database comprising information related to vehicles which database can be indexed using the ID.

Being able to 'talk' to a specific radar detection in this way is only possible if an association first is made between a wireless communication ID or address of some sort and the radar detection, since the radar detection is just a passive reflection off a nearby object, and not modulated (unless the target comprises a transponder or the like).

The techniques disclosed herein leverage on the fact that radar detections are symmetric in the sense that, for two radar transceivers, the detected distances and the detected relative velocities will always be the same, or at least nearly the same if some measurement error is introduced. This means that, as long as both traffic objects detect each other by their respective radar systems, there should be at least one radar detection made by each transceiver that aligns in both range and Doppler with a detection made by the other transceiver. A search can therefore be made in order to find a radar detection from one detection list which has a 'match' in the other radar detection list.

Radar detection lists can be shared between traffic objects together with identification data (ID) allowing a receiver of the data transmission to identify the transmitter and to respond back to the transmitter, thus establishing the communication link 110 between two traffic objects.

Figures 2 and 3 exemplify aspects of the proposed method. In Figure 2, an ego vehicle 100 is maneuvering through a traffic environment comprising other traffic objects, in this example three vehicles 210, 220, 230 are shown; a first vehicle 210, a second vehicle 220 and a third vehicle 230. The ego vehicle 100 comprises the radar system discussed above in connection to Figure 1, i.e., it is able to transmit both radar signals in a field of view 125 as well as data signals via wireless link 110.

Figure 3 shows an example of three radar detections 310, 320, 330 made by the ego vehicle 100 in a Range-Doppler graph; a first radar detection 310, a second radar detection 320 and a third radar detection 330. The ego vehicle 100 makes several radar detections, for instance, it is likely that the detections comprise detections corresponding to at least the two vehicles 210, 220, the first vehicle and the second vehicle 220, in front of the ego vehicle 100. However, it is not able to establish a communications link specifically to the second vehicle 220 in front of the ego vehicle since it cannot know the ID of this wireless transceiver. It only knows that it is likely one of the three detections made.

To form an association between wireless data transmitters on the vehicles 210, 220, 230 and the radar detections 310, 320 330, the other vehicles may share their detection lists. The detection list of first vehicle 210 is shown as squares 340, 341, 342 in Figure 3, while the detection list of the third vehicle 230 is shown as stars.

The ego vehicle 100 may now compare its own detections to the received lists of radar detections. For the detection list received from the first vehicle 210, there is one radar detection 340 which is similar to first radar detection 310 in both range and relative velocity, i.e., Doppler. It is thus likely that the first radar detection 310 originates from the first vehicle 210. In the same way, there is one radar detection 351 that is similar to the third radar detection 330 in both range and in Doppler, and therefore likely originates from the third vehicle 230.

Once an ego radar detection has been found which has a good enough match in the received list of radar detections, the ID of the wireless transmitter which transmitted the data can be associated with the ego radar detection. This way, if the ego vehicle 100 wants to send a message specifically to the traffic object from which the first radar detection 310 originates, it should address this message to the first vehicle 210. If the ego vehicle wants to communicate with the traffic object from which the third radar detection 330 originates, it should instead address its transmission to the third vehicle 230.

It is appreciated that some traffic objects, such as signposts 240, traffic lights 250 and fixed infrastructure, may be stationary objects. These traffic objects 240, 250 may according to some aspects add information regarding being stationary objects, and even which sort of stationary object, to the transmitted data message. Other traffic objects that are relatively slow moving objects such as pedestrians 260 can add information regarding being relatively slow moving objects, and even which sort of stationary object, to the transmitted data message. According to some aspects, this can simplify the comparison operation since only detections related to traffic objects that have a velocity that corresponds to the velocity of the ego vehicle 100 are involved in the comparison operation.

According to some aspects, both stationary objects 240, 250 and pedestrians 260 are adapted to transmit data messages by means of V2X communication. For a pedestrian 260, the V2X communication can take place via a mobile phone or similar that is carried by the pedestrian 260. It is furthermore appreciated that the remote server 140 may have access to radar target detection lists generated by one or more traffic objects in a traffic environment. Thus, the data transmission does not necessarily originate physically from a given traffic object, while still being associated with some detection list. Thus, a vehicle such as the vehicle 101 may transmit its radar detection list to the remote server, and the remote server may then transmit the data comprising the ID of the vehicle 101 and the radar detection list from this vehicle 101.

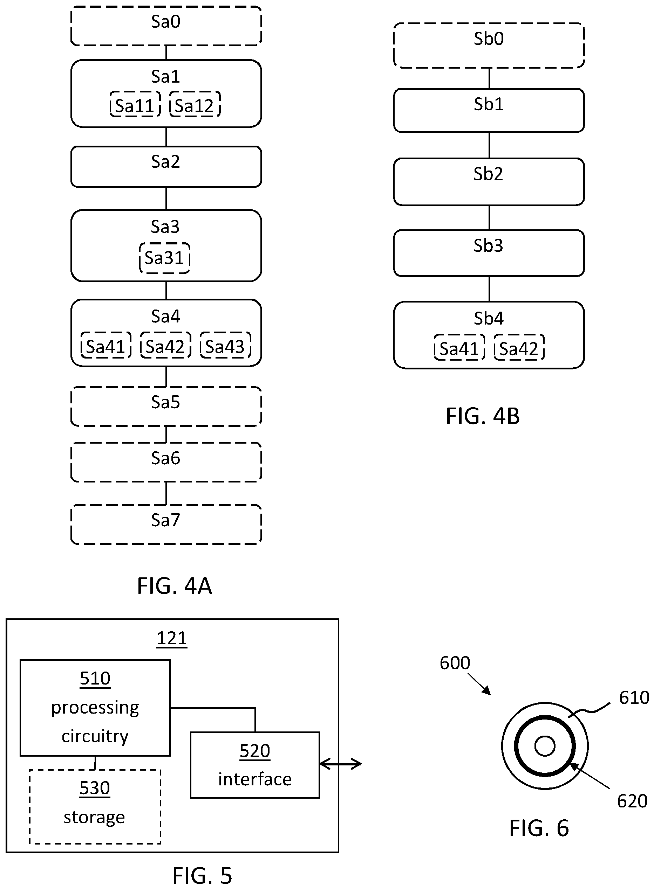

To summarize, with reference to Figure 4A, there is disclosed herein a method in a vehicle radar system 121

for associating a radar detection 310 originating from a traffic object 101 with a data transmission 110 from the traffic object 101. The method comprises receiving Sa1 the data transmission 110, the data transmission comprising a transmitter identification (ID) and a received list of radar detections 340, 341, 342 generated by a radar transceiver associated with the ID. The method also comprises generating Sa2 an ego list of radar detections 310, 320, 330 by the vehicle radar system 121, and comparing Sa3 detections in the ego list of radar detections 310, 320, 330 to detections in the received list of radar detections 340, 341, 342 to determine differences between detections in the ego list of radar detections and detections in the received list of radar detections. Thus, for each radar detection, or at least for a subset of radar detections, made by the ego vehicle, the received radar detections are scanned for a match. A 'difference' between two radar detections can be determined in various ways, some of which will be discussed below.

The method also comprises associating Sa4 a first detection 310 from the ego list of detections with the data transmission and/or to the ID in case a difference between the first detection and a detection from the received list of detections satisfies a similarity criterion.

The received list of radar detections may only comprise distances to detected targets, or distances and bearings. However, a more robust similarity matching between two lists of radar detections can be obtained if each radar detection comprises at least a range and a Doppler value.

Many modern vehicles comprise more than one radar transceiver. For instance, passenger cars normally comprise a front radar which is complemented by one or more side radars and potentially also one or more rearwards looking radars. There may also be corner radars. According to some aspects, the method comprises receiving Sa12 a received list of radar detections 340, 341, 342 comprising radar detections obtained from a plurality of different and spatially separated radar transceivers associated with the data transmission and/or to the ID. In this case the comparing operation may need to be performed over several detection lists. I.e., the detection data from each radar transceiver on the ego vehicle 100 may need to be compared to the detection data from a plurality of other radar transceivers.

Normally, however, the detection lists are not overly large, and this type of comparison operation is likely feasible in terms of computational complexity. Some type of rough sorting or discarding can also be done, for instance, radar detections of targets far away need not be compared to detection lists which originate from short range radars.

Wireless communication normally takes place over a restricted communications resource, such as a frequency band resource or a time slot resource. To conserve this resource, it may be advantageous to trigger transmission of detection lists on demand. Thus, according to some aspects, the method comprises transmitting Sa0 a request for detection list transmissions by nearby traffic objects. This request then triggers transmission of the detection lists, perhaps in addition to some regular more sparse transmission schedule.

According to some aspects, the data transmissions are synchronized according to some known schedule, such that vehicles can adapt the association processing to the known transmission schedule.

There may be some delay involved in the different processing steps of the disclosed method. This delay may cause mismatch between two detections even if they are 'matching'. For instance, the ego list of radar detections 310, 320, 330 may be generated at time T0, while the received list of radar detections 340, 341, 342 may have been generated at time T0+D. To compensate for this type of mismatch, each radar detection in the received list of radar detections optionally comprises a time stamp, and the comparing Sa31 comprises adjusting a target range in the received list of radar detections to account for a processing delay prior to the comparing. The adjusting is based on the respective Doppler values of the radar detections.

The Doppler value associated with a radar detection relates to the range-rate of a radar detection, i.e., how fast the distance between radar transceiver and target changes. Thus, assuming that the range-rate stays more or less constant over some short time period (on the order of tens of milliseconds), the range rate can be used to adjust the range based on the time stamp. For example, if the estimated delay, determined based on the time stamp, is T seconds, then the adjusted range r' becomes r'=r+TD, where D is the range rate given in meters per second.

The similarity criterion, i.e., the metric which determines if two radar detections are similar or not, may vary according to different aspects of the proposed method.

For example, the similarity criterion Sa41 may comprise a difference between the first radar detection and a radar detection from the received list of radar detections which is associated with the smallest difference out of all radar detections in the received list of radar detections.

In other words, if the first detection (the detection from the ego list of detections) is e-d1, the difference operation is f(), and the N detections in the received list of radar detections are denoted r-d1 to r-dN, then the similarity criterion becomes the smallest of the differences f(e-d1, r-d1), f(e-d1, r-d2), ..., f(e-d1, r-dN). The difference operation may be some norm value or numeric difference. For instance, if each detection is a vector $d_i=[r_i, D_i]$, i=1,2, where $r_i$ is a range and $D_i$ is a Doppler value, then the difference function may be just $||d_1-d_2||$, where $||.||$ is the 2-norm. In general, many different difference metrics can be used with the methods disclosed herein to evaluate similarity of two radar detections, e.g., 1-norms, 2-norms, infinity norms, and absolute values.

A weighted similarity metric or criterion can also be used, in case more emphasis is to be placed on, e.g., Doppler compared to range. In such cases, optionally, the similarity criterion is a weighted similarity criterion Sa42configured to weight a difference between detection ranges in relation to a difference between Doppler values of the radar detection. For instance, if a detection is again di=[ri,Di], then a similarity criterion can be a*|(r1-r2)| + b*| (D1-D2), where |.| denotes absolute value and where a and b are pre-determined weight values. The weights can be determined in dependence of an expected accuracy in the range in relation to an expected accuracy in the Doppler value.

The similarity criterion can also be a time averaged similarity criterion. In this case several detection lists are considered over time in order to arrive at a more robust association between radar target detections and data transmissions. Thus, according to some aspects, the similarity criterion is a time averaged similarity criterion Sa43 evaluated over more than one ego list of radar detections 310, 320, 330 and respective received list of radar detections 340, 341, 342. The time averaged similarity criterions may also be weighted, such that older detection lists are given less weight compared to more recent detection lists. The weights may also be set in dependence of a received signal strength associated with the detections. This way, strong detections are given more weight over time compared to weaker detections.

As mentioned above, once an association has been made between a radar detection and a data transmission and/or a data transmitter, classification becomes easy. According to some aspects, the data transmission comprises a traffic object type associated with the ID, and the method comprises classifying Sa5 the first detection 310 from the ego list of detections based on the traffic object type. In other words, instead of the ego vehicle trying to figure out what type of object corresponds to a given radar detection, it may just ask the radar detection which type of object it is.

The herein disclosed methods can be used with advantage to avoid traffic accidents by establishing communication links to traffic objects corresponding to respective radar target detections. The ego vehicle is then able to 'talk' directly to at least some of its radar detections. According to some aspects, the data transmission comprises a maneuver message. The method then comprising executing Sa6 an ego vehicle maneuver based on the maneuver message and on the first radar detection associated with the data transmission. For instance, the data transmission may comprise an emergency braking notification broadcasted by the vehicle performing the emergency brake. The ego vehicle, having associated the data transmission with a particular radar detection, may then determine if it needs to perform some maneuver in response to the emergency braking or if the emergency braking does not affect the current maneuvering of the ego vehicle.

A method corresponding to the methods discussed above is executed in the other traffic objects. Thus, with reference to Figure 4B, there is also disclosed herein a method in a vehicle radar system 121 for associating a radar detection 310 originating from a traffic object 101 with a data transmission 110 from the traffic object 101. The method comprises obtaining Sb1 a transmitter identification, ID, associated with the vehicle radar system 121 and generating Sb2 a list of radar detections by the vehicle radar system 121. The method also comprises composing Sb3 data comprising the ID and the list of radar detections, and transmitting Sb4, by a wireless data transmitter, the data as a data transmission. Thus, the data transmission is created and transmitted, such that it can be received by the ego vehicle 100, whereby the ego vehicle may perform the methods discussed above in connection to Figure 4A.

According to some aspects, the method comprises receiving Sb0 a request for detection list transmissions by nearby traffic objects. This request then triggers the transmission of the data transmission.

Most radar transceivers will be assembled on, e.g., a vehicle arranged also to generate the data transmission. In other words, the radar system 121 often comprises a radar transceiver 120 spatially co-located with the wireless data transmitter Sb41. However, according to some aspects, the radar system 121 may also comprises a radar transceiver 120 spatially separated from the wireless data transmitter Sb42. The data transmission may, for instance, originate from a remote server 140 or from some other transmitter which has access to the detection lists of a given traffic object.

The ego vehicle 100 may of course receive more than one data transmission from more than one nearby traffic object. This plurality of data transmissions all comprise radar detection lists, i.e., ranges and possibly also Doppler values. According to some aspects, the method also comprises determining Sa7 coordinates and velocities of a set of nearby traffic objects in a global coordinate system based on the plurality of received data transmissions.

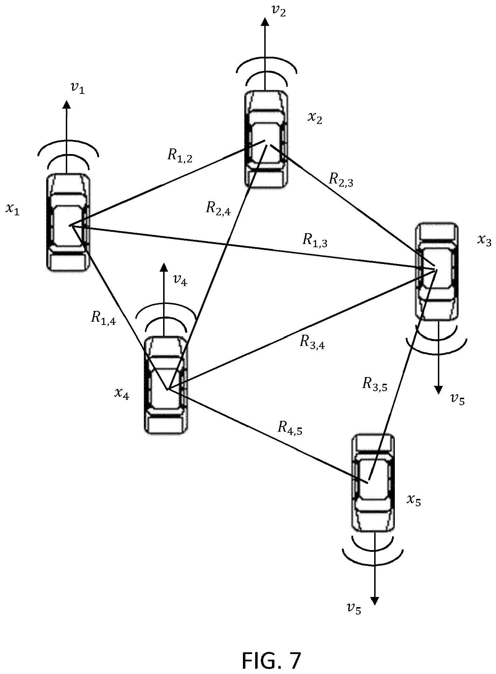

Figure 7 shows an example of this type of joint positioning technique, where each traffic object out of K traffic objects $U_k, k = 1,...,K$ is associated with a location and a velocity, i.e., a state of a traffic object is described by a vector

$$\begin{bmatrix} x_i \\ v_i \end{bmatrix},$$

where $x_i$ is the location of the i: th traffic object in two or three dimensions, and $v_i$ is a velocity vector of the i:th traffic object. The traffic objects share radar detection lists comprising ranges $R_{i,j}$ (in meters) and relative velocity values obtained from Doppler data $D_{i,j}$ (in m/s) .

A range measurement between traffic object i and traffic object j can be modelled as $R_{i,j} = ||x_i - x_j|| + n$, where $n$ is a noise term.

A Doppler measurement between traffic object i and traffic object j can be modelled as

$$D_{i,j} = v_i^T \left( \frac{x_i - x_j}{\|x_i - x_j\|} \right) - v_j^T \left( \frac{x_i - x_j}{\|x_i - x_j\|} \right) + n,$$

where $n$ is again a noise term.

An optimization problem can now be formulated as

$$\min_{x_1, \dots, x_K, v_1, \dots, v_K} \sum_{i=1}^{K} \sum_{j=1}^{K} \left( R_{i,j} - \|x_i - x_j\| \right)$$

$$+ \left( D_{i,j} - v_i^T \left( \frac{x_i - x_j}{\|x_i - x_J\|} \right) - v_j^T \left( \frac{x_i - x_j}{\|x_i - x_j\|} \right) \right)$$

This problem can be solved, i.e., the objective function can be minimized over the coordinates and the velocity vectors by, e.g., gradient descent methods, by brute force search or by other optimization methods. Both gradient descent methods and brute force searches such as exhaustive searches are known and will therefore not be discussed in detail herein.

The disclosed joint positioning method can be complemented by the targets also distributing global coordinates and velocities obtained by, e.g., a global positioning system.

This data can be used as initialization for the optimization routine. Thus, a set of position estimates obtained from an information source associated with relatively large error, such as from a global positioning system (GPS) in urban canyon environments, may be refined based on solving the above optimization problem.

Figure 5 schematically illustrates, in terms of a number of functional units, the components of the control unit 121 according to an embodiment. Processing circuitry 510 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 530. The processing circuitry 510 may further be provided as at least one application specific integrated circuit (ASIC), or field programmable gate array (FPGA).

Particularly, the processing circuitry 510 is configured to cause the control unit 121 to perform a set of operations, or steps. These operations, or steps, were discussed above in connection to the various radar transceivers and methods. For example, the storage medium 530 may store the set of operations, and the processing circuitry 510 may be configured to retrieve the set of operations from the storage medium 530 to cause the control unit 121 to perform the set of operations. The set of operations may be provided as a set of executable instructions. Thus, the processing circuitry 510 is thereby arranged to execute methods and operations as herein disclosed.

The storage medium 530 may also comprise persistent storage, which, for example, can be any single one or combination of magnetic memory, optical memory, solid state memory or even remotely mounted memory.

The control unit 121 may further comprise a communications interface 520 for communications with at least one other unit. As such, the radar interface 520 may comprise one or more transmitters and receivers, comprising analogue and digital components and a suitable number of ports for wired or wireless communication.

The processing circuitry 510 is adapted to control the general operation of the control unit 121 e.g. by sending data and control signals to the external unit and the storage medium 530, by receiving data and reports from the external unit, and by retrieving data and instructions from the storage medium 530. Other components, as well as the related functionality, of the control unit 121 are omitted in order not to obscure the concepts presented herein.

Figure 6 shows a computer program product 600 comprising computer executable instructions 620 arranged on a computer readable medium 610 to execute any of the methods disclosed herein.

According to some aspects, a traffic object can be any object that is associated with a traffic situation or traffic scenario such as for example a vehicle 100, a traffic sign 240, a traffic light 250 and/or a pedestrian 260.

## Claims

1. A method in a vehicle radar system (121) for associating a radar detection (310) originating from a traffic object (101, 210) with a data transmission (110) from the traffic object (101, 210), the method comprising receiving (Sa1) the data transmission (110), the data transmission comprising a transmitter identification, ID, and a received list of radar detections (340, 341, 342) generated by a radar transceiver associated with the ID,

generating (Sa2) an ego list of radar detections (310, 320, 330) by the vehicle radar system (121),

comparing (Sa3) detections in the ego list of radar detections (310, 320, 330) to detections in the received list of radar detections (340, 341, 342) to determine differences between detections in the ego list of radar detections and detections in the received list of radar detections, and

associating (Sa4) a first detection (310) from the ego list of detections with the data transmission and/or to the ID in case a difference between the first detection and a detection (340) from the received list of detections satisfies a similarity criterion.

2. The method according to claim 1, comprising receiving (Sail) a received list of radar detections (340, 341, 342) where each radar detection comprises at least a range and a Doppler value.

3. The method according to claim 1 or 2, comprising receiving (Sa12) a received list of radar detections (340, 341, 342) comprising radar detections obtained from a plurality of different and spatially separated radar transceivers associated with the data transmission and/or to the ID.

4. The method according to any previous claim, comprising transmitting (Sa0) a request for detection list transmissions by nearby traffic objects.

5. The method according to claim 2, where each radar detection in the received list of radar detections comprises a time stamp, wherein the comparing (Sa31) comprises adjusting a target range in the received list of radar detections to account for a processing delay prior to the comparing, wherein the adjusting is based on the respective Doppler values of the radar detections.

6. The method according to any previous claim, wherein the similarity criterion (Sa41) comprises a difference between the first detection and a detection from the received list of radar detections which is associated with the smallest difference out of all detections in the received list of radar detections.

7. The method according to any previous claim, wherein the similarity criterion is any one of:

a weighted similarity criterion (Sa42) configured to weight a difference between detection ranges in relation to a difference between Doppler values of the radar detection; and/or

a time averaged similarity criterion (Sa43) evaluated over more than one ego list of radar detections (310, 320, 330) and respective received list of radar detections (340, 341, 342) .

8. The method according to any previous claim, wherein the data transmission comprises a traffic object type associated with the ID, the method comprising classifying (Sa5) the first detection (310) from the ego list of detections based on the traffic object type.

9. The method according to any previous claim, wherein the data transmission comprises a maneuver message, the method comprising executing (Sa6) an ego vehicle maneuver based on the maneuver message and on the first radar detection associated with the data transmission.

10. The method according to any previous claim, comprising determining (Sa7) coordinates and velocities of a set of nearby traffic objects in a global coordinate system based on a plurality of received data transmissions.

11. A method in a vehicle radar system (121) for associating a radar detection (310) originating from a traffic object (101) with a data transmission (110) from the traffic object (101), the method comprising obtaining (Sb1) a transmitter identification, ID,

associated with the vehicle radar system (121), generating (Sb2) a list of radar detections by the vehicle radar system (121),

composing (Sb3) data comprising the ID and the list of radar detections, and

transmitting (Sb4), by a wireless data transmitter, the data as a data transmission.

12. The method according to claim 11, comprising receiving (Sb0) a request for detection list transmissions by nearby traffic objects.

13. The method according to claim 11 or 12, where the radar system (121) comprises a radar transceiver (120) spatially co-located with the wireless data transmitter (Sb41).

14. The method according to claim 11 or 12, where the radar system (121) comprises a radar transceiver (120) spatially separated from the wireless data transmitter (Sb42).

15. A vehicle (100) comprising a control unit (121), the control unit comprising processing circuitry (510) arranged to perform the methods of any previous claim.

FIG. 1

FIG. 2

FIG. 3

Sa0

Sa1
Sa11 Sa12

Sa2

Sa3
Sa31

Sa4
Sa41 Sa42 Sa43

Sa5

Sa6

Sa7

FIG. 4A

Sb0

Sb1

Sb2

Sb3

Sb4
Sa41 Sa42

FIG. 4B

121

510
processing circuitry

530
storage

520
interface

FIG. 5

600

610

620

FIG. 6

FIG. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/180394 A1 (PCMS HOLDINGS INC [US]) 19 October 2017 (2017-10-19) * abstract; figures 4A-8 * * paragraph [0038] - paragraph [0039] * * paragraph [0052] - paragraph [0058] * ----- | 1-15 | INV. G01S13/86 G01S13/931 G01S15/86 G01S15/931 G01S17/86 G01S17/931 |
| X | US 2002/003488 A1 (LEVIN MOSHE [IL] ET AL) 10 January 2002 (2002-01-10) * abstract; figures 1-3 * * paragraph [0023] - paragraph [0044] * ----- | 1-3,6,7, 9-11, 13-15 | |
| X | US 2010/198513 A1 (ZENG SHUQING [US] ET AL) 5 August 2010 (2010-08-05) * abstract; figures 1-8 * * paragraph [0020] - paragraph [0027] * ----- | 1-3,6,7, 9-11, 13-15 | |
| A | US 2014/070980 A1 (PARK MAN BOK [KR]) 13 March 2014 (2014-03-13) * the whole document * ----- | 1-15 | |

TECHNICAL FIELDS
SEARCHED (IPC)

G01S

The present search report has been drawn up for all claims

| Place of search | Date of completion of the search | Examiner |
|---|---|---|
| Munich | 20 May 2020 | López de Valle, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 21 4218

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2020

| Patent document cited in search report | | | Publication date | Patent family member(s) | | | Publication date |
|---|---|---|---|---|---|---|---|
| WO 2017180394 | A1 | | 19-10-2017 | NONE | | | |
| US 2002003488 | A1 | | 10-01-2002 | NONE | | | |
| US 2010198513 | A1 | | 05-08-2010 | CN | 101799992 | A | 11-08-2010 |
| | | | | DE | 102010006084 | A1 | 07-10-2010 |
| | | | | US | 2010198513 | A1 | 05-08-2010 |
| US 2014070980 | A1 | | 13-03-2014 | CN | 103680207 | A | 26-03-2014 |
| | | | | DE | 102013014106 | A1 | 13-03-2014 |
| | | | | KR | 20140033277 | A | 18-03-2014 |
| | | | | US | 2014070980 | A1 | 13-03-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3323151 A1